Europäisches Patentamt

European Patent Office

Office européen des brevets

(11) Veröffentlichungsnummer: **0 236 918**

**A2**

(12) **EUROPÄISCHE PATENTANMELDUNG**

(21) Anmeldenummer: **87103025.0**

(22) Anmeldetag: **04.03.87**

(51) Int. Cl.4: **H01B 3/44**

(30) Priorität: **08.03.86 DE 3607757**

(43) Veröffentlichungstag der Anmeldung:
**16.09.87 Patentblatt 87/38**

(84) Benannte Vertragsstaaten:
**AT BE CH DE FR GB LI NL SE**

(71) Anmelder: **BASF Aktiengesellschaft**
**Carl-Bosch-Strasse 38**
**D-6700 Ludwigshafen(DE)**

(72) Erfinder: **Schlag, Johannes, Dr.**
**Leuschnerstrasse 36**
**D-6700 Ludwigshafen(DE)**
Erfinder: **Koenlein, Ernst, Dr.**
**Ungsteiner Strasse 4**
**D-6700 Ludwigshafen(DE)**
Erfinder: **Bauer, Peter**
**Erich-Kaestner-Strasse 13**
**D-6700 Ludwigshafen(DE)**
Erfinder: **Koessler, Ludwig**
**Schlachthofstrasse 24 a**
**D-6718 Gruenstadt(DE)**
Erfinder: **Hausz, Alfred Friedrich, Dr.**
**Osloer Weg 6**
**D-6700 Ludwigshafen(DE)**

(54) **Kabelisolierung auf Basis von Ethylenpolymerisaten mit hoher Widerstandsfähigkeit gegenüber der Bildung von Wasserbäumchen.**

(57) Die Erfindung betrifft Kabelisolierungen mit hoher Widerstandsfähigkeit gegenüber dem Entstehen oder dem Wachstum von Wasserbäumchen (water trees) und mit hoher Alterungsbeständigkeit, bestehend aus Ethylenpolymerisaten und 0,5 bis 20 Gewichtsprozent eines Styrolcopolymerisats, das ein mindestens zu 90 % olefinischen Doppelbindungen hydriertes Styrol-Dien-Copolymerisat ist.

EP 0 236 918 A2

## Kabelisolierung auf Basis von Ethylenpolymerisaten mit hoher Widerstandsfähigkeit gegenüber der Bildung von Wasserbäumchen

Die Erfindung betrifft eine Kabelisolierung mit hoher Widerstandsfähigkeit gegenüber dem Entstehen oder dem Wachstum von Wasserbäumchen (water trees) und mit hoher Alterungsbeständigkeit, bestehend aus Ethylenpolymerisaten und 0,5 bis 20 Gewichtsprozent, bezogen auf das Ethylenpolymerisat, eines Styrolcopolymerisats und üblichen Zusatzstoffen in üblichen Mengen.

Bei derartigen Isolierungen für elektrische Kabel und Leitungen aus Ethylenpolymerisaten können sich bei gleichzeitiger Einwirkung von hohen Feldstärken und Feuchtigkeit die sogenannten Wasserbäumchen - (water trees) ausbilden, die als Schwächung der Isolierung angesehen werden und deshalb durch geeignete Zusätze vermieden werden müssen.

Es gibt zahlreiche Vorschläge zur Vermeidung bzw. Verminderung der Gefahr von Wasserbäumchen, welche die Zusammensetzung bzw. die Zugabe von Verzögerer gegen die Bildung von Wasserbäumchen betreffen.

So ist es aus der DE-A-29 48 492 bekannt, das für Kabelisolierungen vorgesehene Polyolefinmaterial nach der Granulierung und unmittelbar vor der Extrusion mit Wasser zu waschen, um die die Wasserbäumchen verursachenden geringen Mengen wasserlöslicher und hygroskopischer Salze zu entfernen - (vgl. auch DE-A-29 11 756). Nachteilig bei diesem bekannten Verfahren ist der verhältnismäßig große Verfahrensaufwand, denn die Granulate müssen nach dem Waschvorgang mit Heißluft getrocknet werden.

Es ist auch bereits beschrieben, dem Polyolefinkabelmaterial vor seiner Herstellung sog. Wasserbäumchen-Inhibitoren zuzusetzen, die sich von polymeren Materialien ableiten. So werden für diesen Zweck in der Literatur empfohlen: Organopolysiloxane (vgl. US-A-4 492 647, 4 536 530 und EP-A-109 797), Polyethylenglykole (vgl. EP-A-57 604), Epoxidharze (vgl. Chem. Abstr. 96:182235), Ethylen-1-Buten-oder -1-Hexen-Copolymere (vgl. Chem. Abstr. 101:193825), Polypropylen (vgl. Chem. Abstr. 102:8329), Poly-1-buten (vgl. Chem. Abstr. 98:5097), Ethylen-Vinylacetat-Copolymerisat (vgl. US-A-4 092 488), Polystyrol und Triallylisocyanurat (vgl. DD-A-160 808) mit Styrol gepfropftes Ethylen-Vinylacetat-oder Ethylen-Alkylacrylat-Copolymerisat (vgl. Chem. Abstr. 103:7802), Polyvinylalkohol (vgl. Chem. Abstr. 95:204983), chlorsulfoniertes Polyethylen (vgl. Chem. Abstr. 95:204981), Polyamid (vgl. Chem. Abstr. 96:21007) oder ein Styrolcopolymerisat, z.B. Styrol-Butadien-oder Styrol-Isopren-Kautschuk (vgl. Chem. Abstr. 92:7572 und Annual Convention of the Wire Association in Baltimore, U.S.A., reprint of paper, Nov.1984, ETR No. 3A-1995).

Bei den oben beschriebenen bekannten Polyolefinkabelmaterialien mit Zusätzen von polymeren Wasserbäumchen-Inhibitoren sind die Effekte und die Beeinflussung des Wasserbäumchenwachstums sehr unterschiedlich, quantitative Aussagen fehlen in den meisten Fällen. In vielen Fällen wirken sich die Zusätze negativ auf die Homogenität des Polyolefin-Kabelmaterials und nachteilig auf die Alterungsbeständigkeit des Isoliermaterials aus.

Es ist auch bereits bekannt, gegen elektrische Beanspruchung stabilisiertes Isoliermaterial auf Basis von Polyolefinen und Copolymerisaten des Styrols mit Butadienmonomeren zu verwenden (vgl. DE-A-24 36 770). Dieses Material ist gegen elektrische Spannungsbeanspruchung stabilisiert. Das heißt, die Ausbildung von elektrischen Entladungskanälen soll verzögert bzw. verhindert (elektrical treeing) und damit eine Erhöhung der Ionisierungsspannung bei der Einwirkung eines elektrischen Feldes erreicht werden. Bezüglich der nachteiligen Effekte auf die die Alterungseigenschaften gilt das Obengesagte.

Aufgabe der vorliegenden Erfindung war es, die eingangs erwähnten Nachteile zu vermeiden und eine Kabelisolierung auf Basis von Ethylenpolymerisaten zu schaffen, die sowohl eine hohe Widerstandsfähigkeit gegenüber dem Entstehen oder dem Wachstum von Wasserbäumchen aufweisen als auch homogen sind und eine hohe Alterungsbeständigkeit besitzen.

Diese Aufgabe wurde durch Kabelisolierungen gemäß Ansprüchen 1 bis 5 gelöst.

Isolierungen für elektrische Kabel und Leitungen aus Ethylenpolymerisaten sind wohlbekannt. Es ist wichtig, daß das Isoliermaterial verschiedene physikalische mechanische und elektrische Eigenschaften aufweist, um es für spezielle Anwendungen in der Kabelindustrie geeignet zu machen. Im vorliegenden Fall soll insbesondere die Widerstandsfähigkeit gegenüber der Bildung von Wasserbäumchen derart verbessert sein, daß bei Anwendung eines Ethylenpolymerisatmaterials mit technisch nicht vermeidbaren Gehalten an Verunreinigungen an wasserlöslichen Salzen unter Spannungsbelastung bei Wasser-oder Feuchtigkeitszutritt die Lebensdauer der Isolierung gegenüber nicht ausgerüstetem Material erhöht ist. Da die zulässige Leitertemperatur 90°C beträgt, soll gleichzeitig eine gute Alterungsbeständigkeit, d.h. eine langanhaltende Beständigkeit gegen thermische Oxidation und Abfall der mechanischen Eigenschaften gewährleistet sein.

Unter Ethylenpolymerisaten im Sinne der vorliegenden Erfindung sollen Ethylenhomo-und -copolymerisate verstanden werden. Derartige Ethylen polymerisate sind so bekannt, daß sich eine weitere Erläuterung erübrigt. Besonders geeignete Ethylenpolymerisate sind Polyethylene niederer Dichte (unter 0,934 g/cm$^3$ nach DIN 53 479), Ethylen-Vinylacetat-Copolymerisat, bevorzugt mit 0,5 bis 8 Gewichtsprozent einpolymerisiertem Vinylacetat, Ethylen-Acrylsäureester-Copolymerisate, insbesondere Ethylen-Acrylsäureethyl, n-oder -tert-butyl-oder -ethylhexylacrylsäureester und ähnliche Ethylencopolymerisate. Die Ethylenpolymerisate weisen im nicht vernetzten Zustand bevorzugt Schmelzindexwerte, gemessen nach ASTM-D 1238-70 bei 190°C und 2,16 kg Belastung von 0,2 bis 10g/10min und Dichten von 0,890 bis 0,934 g/cm$^3$, gemessen nach DIN 53 479, auf. Statt der reinen Ethylenhomo-oder -copolymerisate sind auch Mischungen verschiedener Ethylenpolymerisate geeignet. Derartige Ethylenpolymerisate, deren Eigenschaften und Herstellung sind beispielsweise in den Publikationen "Ullmanns Encyklopädie der technischen Chemie", 4.Auflage, Band 19, Verlag Chemie GmbH, D-6940 Weinheim, 1980, Seiten 169 bis 195; "Kunststoffe" 67, (1977), Seiten 118 bis 121 und den US-Patenten 3 117 953 und 4 217 431 beschrieben. Die Ethylenpolymerisate können vernetzt oder unvernetzt sein, bevorzugt sind sie aber zu 50 bis 90% entweder durch Peroxide oder energiereiche Strahlung vernetzt.

Die Ethylenpolymerisate enthalten 0,5 bis 20, bevorzugt 2 bis 10, insbesondere 4 bis 8 Gewichtsprozent eines Styrolcopolymerisats, wobei sich die Gewichtsprozentzahlen auf das Gewicht des Ethylenpolymerisats beziehen. Das Styrolpolymerisat wird mit dem Ethylenpolymerisat in üblichen Mischern nach herkömmlichen Methoden gemischt.

Die Mischung aus Ethylenpolymerisat und Styrolcopolymerisat enthält noch übliche Zusatzstoffe in üblichen Mengen. Unter üblichen Zusatzstoffen sind insbesondere Antioxidantien, Flammschutzmittel, Vernetzungshilfsmittel wie Triallylcyanurat und Vernetzungsmittel wie organische Peroxide zu verstehen von 0,5 bis 3,0 Gewichtsprozent, bezogen auf die Mischung.

Erfindungsgemäß soll das Styrolcopolymerisat ein zu mindestens 90% der olefinischen Doppelbindungen hydriertes Styrol-Dien-Copolymerisat sein. Diene sind dabei aliphatische Kohlenwasserstoffe mit zwei olefinischen Doppelbindungen der allgemeinen Formel $C_nH_{2n-2}$. Derartige hydrierte Styrol-Dien-Copolymerisate sind an sich bekannt und beispielsweise in der DE-A-31 06 959 beschrieben. Bevorzugt sind hydrierte Styrol-Dien-Copolymerisate, in denen mindestens 95% der olefinischen Doppelbindungen hydriert sind. Hydrierte Copolymerisate aus Styrol und Butadien können durch Copolymerisation von Styrol und Butadien mit Lithiumalkylinitiatoren in Gegenwart von Tetrahydrofuran oder (cyclo)aliphatischen Kohlenwasserstoffen und anschließendem Hydrieren mit Wasserstoff in Gegenwart von Übergangsmetallkatalysatoren bei Drücken von 5 bis 30 bar und Tempe raturen im Bereich von 50 bis 200C hergestellt werden (vgl. auch DE-C-24 14 872 und DE-A-20 27 841). Als Diene kommen Butadien, Isopren, Pentadien, Dimethylbutadiene etc. in Betracht. Bevorzugt sind Butadien und Isopren, insbesondere Butadien. Die hydrierten Styrolcopolymerisate weisen bevorzugt ein Molekulargewicht (Gewichtsmittel) aus der Lösungsviskosität -gemessen in Toluol bei 25°C -von 40 000 bis 1 000 000, insbesondere von 80 000 bis 500 000 auf. Bevorzugt enthält das hydrierte Styrolcopolymerisat 5 bis 60 Gewichtsprozent Styrol und 95 bis 40 Gewichtsprozent Dien und hydriertes Dien einpolymerisiert. Besonders bevorzugt ist ein hydriertes Styrolcopolymerisat, das ein Blockcopolymerisat ist, bei dem die unterschiedlichen Monomeren nicht statistisch in der Kette eingebaut sind, sondern in dem homopolymere Kettenabschnitte der verschiedenen Monomeren miteinander verknüpft sind.

Die mit der Erfindung erzielbaren Vorteile sind insbesondere darin zu sehen, daß ein homogenes Kabelisoliermaterial auf Basis von Ethylenpolymerisaten zur Verfügung gestellt wird, das sowohl das Entstehen oder Wachsen von Wasserbäumchen inhibiert als auch eine hohe Alterungsbeständigkeit aufweist.


Beispiel1


Polyethylen niederer Dichte des Schmelzindex von 2 g/10 min und einer Dichte von 0,918 g/cm$^3$ werden mit 0,3 Gew.-% 4/4′-Thiobis-(6-tertiärbutyl-3-methylphenol) als Wärmestabilisator und 1,8 Gew.-% Dicumylperoxid als Vernetzer ausgerüstet.

Aus dieser Zubereitung werden 1 mm dicke Preßplatten hergestellt bei einer Temperatur von 130°C, wobei das Polyethylen nicht vernetzt wird.

Bei der Prüfung auf water tree wird Kochsalz in Form kleiner Kristalle (Kantenlänge 10 μm) fein verteilt als Schicht in das Polyethylen eingebracht. Dies geschieht, indem das Salz auf die unvernetzte Platte aufgestäubt, danach eine zweite ebensolche Platte aufgelegt und dieses Sandwich bei 200°C 10min auf eine Dicke von 1 mm gepreßt wird. Dabei wird das Polyethylen vernetzt.

3

Die so hergestellten Proben werden eine Woche bei Raumtemperatur in Wasser gelagert. Danach werden sie bei 100%iger Luftfeuchtigkeit mit einer Feldstärke von 2,5 kV/mm belastet.

Nach der elektrischen Belastung werden unter einem Lichtmikroskop die Anzahl, die Länge und die Struktur der entstandenen water trees in den einzelnen Proben festgestellt. Die Feststellung der Zahl der water trees geschieht im Strahlengang parallel zur Richtung des elektrischen Feldes, in dem die Belastung erfolgte.

Die Zahl der gebildeten water trees wird auf die Zahl der NaCl-Kristalle bezogen und als Menge in Gew.-% in der Tabelle angegeben. Die Länge der water trees wird an ca. 0,5 mm dicken Schnitten durch die Probe ermittelt, wobei die Blickrichtung senkrecht zu der des elektrischen Feldes steht.

Zur Bestimmung der Alterungsbeständigkeit werden Preßplatten im Umlufttrockenschrank bei 150°C freihängend gelagert. Die Zeit bis zum Auftreten der deutlich sichtbaren Versprödungen gilt als Maß der Alterungsbeständigkeit.

Beispiel2

90 Teile Polyethylen niederer Dichte wie in Beispiel 1 werden mit 10 Teilen eines Styrol-Butadien-Styrol-Blockcpolymeren mit einem Gewichtsmittel des Molekulargewichts von ca. 100 000 (cariflex 1101) in der Schmelze homogen gemischt und mit Wärmestabilisator sowie Vernetzer wie in Beispiel 1 ausgerüstet.

Geprüft wird wie in Beispiel 1. Das Ergebnis ist in der Tabelle wiedergegeben.

Beispiel3

90 Teile Polyethylen niederer Dichte wie in Beispiel 1 werden mit 10 Teilen eines Styrol-Butadien-Copolymerisates bestehend aus 55 Gew.-% Styrol und 45 Gew.-% Butadien, dessen ungesättigte Anteile durch Hydrierung abgesättigt wurden und dessen Gewichtsmittel des Molekulargewichts ca. 120 000 beträgt, in der Schmelze homogen gemischt. Dieses Gemisch wird mit Wärmestabilisator und Vernetzer ausgerüstet wie in den Beispielen 1 und 2.

Geprüft wird wie in den Beispielen 1 und 2. Das Ergebnis ist in der Tabelle wiedergegeben.

Tabelle

| Beispiel | Mischung | | | Water Tree | | Alterung |
|---|---|---|---|---|---|---|
| | LDPE Gew.-% | SBS Gew.-% | SBH Gew.-% | 7 Tage Menge/Länge %/μm | 80 Tage Menge/Länge %/μm | Luft 150°C Tage bis Zerstörung |
| 1 | 100 | – | – | 50/100 | 95/900 | 30 |
| 2 | 90 | 10 | – | keine | keine | 5 |
| 3 | 90 | – | 10 | keine | keine | 30 |

LDPE = Polyethylen niederer Dichte
SBS  = Blockcopolymer Styrol-Butadien-Styrol (Cariflex 1101)
SBH  = Styrol-Butadien-Copolymerisat hydriert

Der Tabelle ist zu entnehmen, daß mit hydriertem Butadien-Styrol-Copolymerisat überlegene Eigenschaften hinsichtlich water tree-Bildung und Alterungsbeständigkeit erzielt werden.

**Ansprüche**

1. Kabelisolierung mit hoher Widerstandsfähigkeit gegenüber dem Entstehen oder dem Wächstum von Wasserbäumchen (water trees) und mit hoher Alterungsbeständigkeit, bestehend aus Ethylenpolymerisaten und 0,5 bis 20 Gewichsprozent, bezogen auf das Ethylenpolymerisat, eines Styrolcopolymerisats und üblichen Zusatzstoffen in üblichen Mengen, dadurch gekennzeichnet, daß das Styrolcopolymerisat ein zu mindestens 90 % der olefinischen Doppelbindungen hydriertes Styrol-Dien-Copolymerisat ist.

2. Kabelisolierung nach Anspruch 1, dadurch gekennzeichnet, daß das Styrolcopolymerisat ein hydriertes Styrol-Butadien-oder Styrol-Isopren-Copolymerisat ist.

3. Kabelisolierung nach Anspruch 1, dadurch gekennzeichnet, daß das hydrierte Styrolcopolymerisat ein Molekulargewicht aus der Lösungsviskosität -gemessen in Toluol bei 25°C -von 40 000 bis 1 000 000 aufweist.

4. Kabelisolierungen nach Anspruch 1, dadurch gekennzeichnet, daß das hydrierte Styrolcopolymerisat 5 bis 60 Gewichtsprozent Styrol und 95 bis 40 Gewichtsprozent Dien und hydriertes Dien einpolymerisiert enthält.

5. Kabelisolierung nach Anspruch 1, dadurch gekennzeichnet, daß das hydrierte Styrolcopolymerisat ein Blockcopolymerisat ist.